# EUROPEAN PATENT APPLICATION

(11) **EP 4 806 706 A1**
(43) Date of publication of application: **16.09.2026**
(21) Application number: 24888392.8
(22) Date of filing: 13.09.2024
(51) Int. Cl.: B60L 3/00, B60L 15/20

(54) **VEHICLE CONTROL METHOD, VEHICLE CONTROL DEVICE, AND ELECTRIC VEHICLE**

(30) Priority: 09.11.2023 JP 2023191712
(71) Applicant: TOYOTA JIDOSHA KABUSHIKI KAISHA, Toyota-Shi, Aichi-Ken 471-8571 (JP)
(72) Inventor: HARA, Yoshikazu, Toyota-shi, Aichi 471-8571 (JP); YAMANAKA, Tomio, Toyota-shi, Aichi 471-8571 (JP); HIRAIWA, Hiroshi, Toyota-shi, Aichi 471-8571 (JP)
(74) Representative: Cabinet Beau de Loménie
(86) International application number: PCT/JP2024/032918
(87) International publication number: WO 2025/100092

(57) **Abstract**

A setting information on an operation mode of an electric vehicle is acquired. When switching of the operation mode is detected based on the setting information, a notification sound for notifying a driver of the switching is output from a speaker. The operation mode includes a custom mode in which at least one of: (i) output control of the electric motor based on operation information on a manual driving element of the electric vehicle and; (ii) output control of a pseudo engine sound that is generated based on the operation information is performed. An output manner of the notification sound output from the speaker in response to the detection of the switching to the custom mode is different from an output manner of the notification sound output from the speaker in response to the detection of the switching from the custom mode.

## Description

### [Field]

The present disclosure relates to a technology applied to an electric vehicle that uses an electric motor as a power unit for traveling.

### [Background]

JP6787507B discloses an electric vehicle that uses an electric motor as a power unit for traveling. The electric vehicle of the related art performs output control of the electric motor so as to simulate a torque characteristic specific to an engine vehicle equipped with a manual transmission (hereinafter also referred to as a "MT engine vehicle"). The output control of the electric motor is performed based on a signal from a pseudo-manual transmission that is operated by a driver. The pseudo-manual transmission has a configuration similar to a manual transmission installed in the MT engine vehicle.

### [Prior art document]

### [Patent Document]

[Patent Document 1] JP6787507B

### [Summary]

### [Technical Problem]

According to the electric vehicle of the related art, in addition to an operation mode in which the output control of the electric motor is performed based on a manual shift operation by the driver, an operation mode in which normal output control of the electric motor is performed without being based on the manual shift operation can be set as two operation modes of the electric vehicle. When these driving modes are switched based on a driver's mode designating operation, it becomes possible for the driver to obtain a sensation similar to driving an MT engine vehicle at a desired time and place.

However, as the number of operation modes that can be set in an electric vehicle increases, there arises a possibility that the driver may misunderstand the operation mode designated by the driver himself or herself. In such a case, for example, even if the driver designates an operation mode in which the output control of the electric motor is performed without a manual gear shift operation, the driver may, by misunderstanding contents of the operation mode and performing a manual gear shift operation, experience a feeling of strangeness with respect to the behavior of the electric vehicle. It is therefore anticipated that this problem will occur when a switching of the operation mode takes place. Accordingly, it is desirable to provide an improvement for correctly informing a driver of the details of the operation mode switching.

This disclosure has been achieved in view of the aforementioned problems. One object of this disclosure is to provide a technique capable of correctly informing the driver of details of switching among multiple operation modes for an electric vehicle, including the control mode in which the output control of the electric motor is performed based on the manual gear shifting operation by the driver.

### [Solution to Problem]

A first aspect of the present disclosure relates to a vehicle control method applied to an electric vehicle that uses an electric motor as a driving power unit for traveling, and has the following features.

A vehicle control method comprises: acquiring setting information on an operation mode of the electric vehicle; and when switching of the operation mode is detected based on the setting information, outputting, from a speaker of the electric vehicle, a notification sound for notifying a driver of the electric vehicle of the switching.

The operation mode includes a custom mode in which at least one of output control: (i) output control of the electric motor based on operation information on a manual driving element of the electric vehicle and; and (ii) output control of a pseudo engine sound that is generated based on the operation information is performed.

An output manner of the notification sound output from the speaker in response to the detection of the switching to the custom mode is different from an output manner of the notification sound output from the speaker in response to the detection of the switching from the custom mode.

A second aspect of the present disclosure is a vehicle control device applied to an electric vehicle that uses an electric motor as a driving power unit for traveling, and has the following features.

The vehicle control device comprises one or more processors that are configured to execute various processing. The one or more processors are configured to: acquire setting information on an operation mode of the electric vehicle; and when switching of the operation mode is detected based on the setting information, cause a speaker of the electric vehicle to output a notification sound for notifying a driver of the electric vehicle of the switching.

The operation mode includes a custom mode in which at least one of output control: (i) output control of the electric motor based on operation information on a manual driving element of the electric vehicle and; and (ii) output control of a pseudo engine sound that is generated based on the operation information is performed.

An output manner of the notification sound output from the speaker in response to the detection of the switching to the custom mode is different from an output manner of the notification sound output from the speaker in response to the detection of the switching from the custom mode.

A third aspect of the present disclosure is an electric vehicle that uses an electric motor as a driving power unit, and has the following features.

The electric vehicle comprises a speaker, a manual driving element, and one or more processors that are configured to execute various processing. The one or more processors are configured to: acquire setting information on an operation mode of the electric vehicle; and when switching of the operation mode is detected based on the setting information, cause the speaker to output a notification sound for notifying a driver of the electric vehicle of the switching.

The operation mode includes a custom mode in which at least one of output control: (i) output control of the electric motor based on operation information on a manual driving element of the electric vehicle and; and (ii) output control of a pseudo engine sound that is generated based on the operation information is performed.

An output manner of the notification sound output from the speaker in response to the detection of the switching to the custom mode is different from an output manner of the notification sound output from the speaker in response to the detection of the switching from the custom mode.

### [Effects]

According to the present disclosure, it becomes possible to vary the output manner of the notification sound from the speaker in a case where the switching from other operation modes except the custom mode to the custom mode is detected, and that in a case where the switching from the custom mode to the other operation modes is detected. Therefore, it becomes possible to correctly inform the driver that the custom mode has been started and that the custom mode has been terminated. This leads to a secure feeling in the use of the custom mode, making it possible to provide the sense experienced while driving an engine vehicle to the driver in various driving situations.

### [Brief description of drawings]

Fig. 1 is a conceptual view showing an electric vehicle and a vehicle control device according to an embodiment;
Fig. 2 is a block diagram showing a first configuration example of a power control system in the electric vehicle;
Fig. 3 is a diagram illustrating respective examples of an engine model, a clutch model, and a transmission model that constitute an MT engine vehicle model;
Fig. 4 is a diagram illustrating a comparison between a torque characteristic of an electric motor realized by a motor control using an MT engine vehicle model, and a torque characteristic of the electric motor realized by a normal motor control as an electric vehicle;
Fig. 5 is a block diagram illustrating a second configuration example of the power control system in the electric vehicle;
Fig. 6 is a block diagram illustrating an example of a functional configuration of a vehicle control device relating to output control of a pseudo engine sound;
Fig. 7 is a block diagram illustrating another example of the functional configuration of the vehicle control device relating to the output control of the pseudo engine sound;
Fig. 8 is a diagram explaining an operation mode that is assumed in the embodiment;
Fig. 9 is a block diagram illustrating an example of the functional configuration of the vehicle control device relating to the output control of a notification sound;
Fig. 10 is a block diagram illustrating another example of the functional configuration of the vehicle control device related to the output control of the notification sound; and
Fig. 11 is a flowchart illustrating a flow of computer processing particularly relevant to the embodiment.

### [Description of Embodiments]

The embodiment of the present disclosure will be described with reference to the accompanying drawings. The same signs are used for the same or corresponding configurations in the drawings to simplify or omit descriptions.

### 1. Overall Configuration

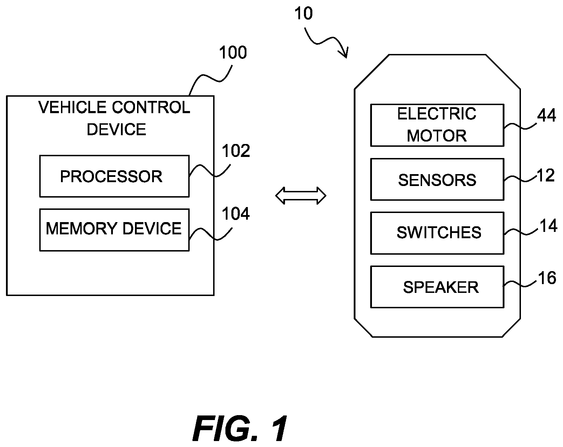

Fig. 1 is a conceptual diagram showing an electric vehicle 10 according to an embodiment of the present disclosure and a vehicle control device 100 applied to the electric vehicle 10. The electric vehicle 10 includes an electric motor 44. Examples of the electric motor 44 include a brushless DC motor or a three-phase AC synchronous motor. The electric vehicle 10 employs the electric motor 44 as a power unit for running.

The electric vehicle 10 also includes various sensors 12. The various sensors 12 include operation state sensors such as an accelerator position sensor, a brake position sensor, and a shift position sensor, as well as driving state sensors such as a wheel speed sensor, an acceleration sensor, and a rotational speed sensor. The accelerator position sensor detects an operation amount (accelerator position) of an accelerator pedal. The brake position sensor detects an operation amount of a brake pedal. The shift position sensor detects a shift position. The wheel speed sensor detects a rotational speed of a wheel of the electric vehicle 10. The acceleration sensor detects lateral acceleration and longitudinal acceleration of the electric vehicle 10. The rotation speed sensor detects a rotational speed of the electric motor 44.

The various sensors 12 also include a position sensor such as a GNSS (Global Navigation Satellite System) sensor, a recognition sensor such as a camera, radar, and LIDAR (Laser Imaging Detection and Ranging). The GNSS detects a position and an attitude of the electric vehicle 10. The camera captures at least a front side of the electric vehicle 10. The radar and the LIDAR recognize a surrounding situation of the electric vehicle 10.

The electric vehicle 10 is also provided with various switches 14. The various switches 14 include operation switches such as a blinker switch, a light switch, and an ignition switch. The blinker switch switches a working status (ON/OFF) of a direction indicator. The light switch switches the working status (ON/OFF) of a light (e.g., headlamps). The ignition switch switches the working status (ON/OFF) of a power circuit of the electric vehicle 10. The various switches 14 also include a mode change switch for switching an operation mode of the electric vehicle 10.

The electric vehicle 10 further comprises a speaker 16. The speaker 16 outputs sound into a cabin of the electric vehicle 10. The speaker 16 includes, for example, a front speaker provided in a front portion of a cabin and a rear speaker provided in a rear portion of the cabin. A total number of speakers constituting the speaker 16 and a layout of the speaker 16 can be changed as desired.

The vehicle control device 100 controls an output of the electric motor 44 to drive the electric vehicle 10. The output control of the electric motor 44 by the vehicle control device 100 includes normal control for operating the electric vehicle 10 as a general electric vehicle, and control for operating the electric vehicle 10 so as to simulate a torque characteristic of the MT engine vehicle. The latter will be described later.

The vehicle control device 100 also generates a sound to output from the speaker 16 (hereinafter also referred to as an "interior sound"). The vehicle control device 100 further outputs the generated interior sound from the speaker 16. For example, the vehicle control device 100 generates a pseudo engine sound as the interior sound and outputs the generated interior sound from the speaker 16. In another example, the vehicle control device 100 generates an interior sound including the pseudo engine sound and outputs the generated interior sound from the speaker 16. The output control of the pseudo engine sound will be described later.

An entirety of the vehicle control device 100 may be mounted in the electric vehicle 10. As another example, at least a part of the vehicle control device 100 may be included in a management server outside the electric vehicle 10. In this case, the vehicle control device 100 may remotely generate the interior sound and may receive the generated interior sound to output it from the speaker 16.

In general terms, the vehicle control device 100 includes at least one processor 102 and at least one memory device 104. The processor 102 executes various processing. Examples of the processor 102 include a CPU (Central Processing Unit), a GPU (Graphics Processing Unit), an ASIC (Application Specific Integrated Circuit), or and FPGA (Field-Programmable Gate Array). The memory device 104 stores (retains) various information. Examples of the memory device 104 include volatile memory, non-volatile memory, an HDD (Hard Disk Drive), and an SSD (Solid State Drive).

### 2. Output control of electric motor

In a typical electric vehicle, an electric motor that is used as a drive power unit substantially differs in torque characteristics from an internal combustion engine that has conventionally been used as a drive power unit in an engine vehicle. Due to the difference in torque characteristics of the power unit, a conventional engine vehicle necessarily includes a transmission, whereas the typical electric vehicle generally does not include a transmission. Moreover, the typical electric vehicle does not include a manual transmission operated by a driver. Therefore, there is a significant difference in the driving feel between the MT engine vehicle and the electric vehicle.

On the other hand, the electric motor can relatively easily control torque by controlling an applied voltage or a field. Accordingly, with the electric motor, it is possible to obtain desired torque characteristics within an operating range of the electric motor by performing appropriate control. By taking advantage of this characteristic, it is possible to control a torque of the electric vehicle so as to simulate a torque characteristic peculiar to the MT engine vehicle. Further, it is also possible to provide a pseudo manual transmission in the electric vehicle such that the driver can obtain an operational feeling similar to the MT engine vehicle. By these measures, it becomes feasible, in the electric vehicle, to simulate the MT engine vehicle.

In the embodiment, the output of the electric motor 44 is controlled so as to simulate a torque characteristic specific to the MT engine vehicle. By performing the output control of the electric motor 44, a driver of the electric vehicle 10 can acquire a sensation as if operating a MT engine vehicle. Hereinafter, a control mode of the electric motor 44 for simulating the torque characteristic specific to the MT engine vehicle in such a manner is also referred to as a "manual mode." Hereinafter, the control mode of the electric motor 44 for operating the electric vehicle 10 as a general electric vehicle is also referred to as an "automatic mode."

Hereinafter, a configuration example of the electric vehicle 10 provided with the manual mode will be described.

### 2-1. First configuration example

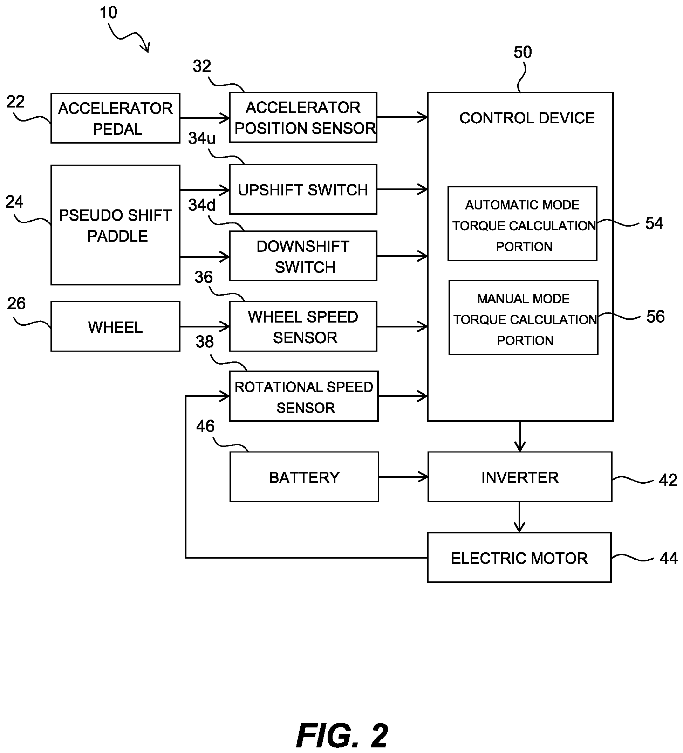

Fig. 2 is a block diagram showing a first configuration example of a power control system of the electric vehicle 10. The electric vehicle 10 comprises the electric motor 44, a battery 46, and an inverter 42. The electric motor 44 is a power unit for driving. The battery 46 stores electric energy for driving the electric motor 44. That is, the electric vehicle 10 is a battery electric vehicle (BEV) which travels using electric energy stored in the battery 46. The inverter 42 converts direct current power that is supplied from the battery 46 during acceleration, into drive power for the electric motor 44. The inverter 42 also converts regenerative power input from the electric motor 44 during deceleration into direct current power, and charges the battery 46.

The electric vehicle 10 includes an accelerator pedal 22 for the driver to input an acceleration request to the electric vehicle 10. The accelerator pedal 22 is provided with an accelerator position sensor 32 configured to detect an accelerator position.

The electric vehicle 10 is provided with a pseudo shift paddle 24. The pseudo shift paddle 24 is a dummy that is different from an original paddle-type shifter. The pseudo shift paddle 24 has a structure similar to a shift paddle provided in a clutch-pedal-less MT engine vehicle. The pseudo shift paddle 24 is mounted on a steering wheel. The pseudo shift paddle 24 includes an upshift switch 34u and a downshift switch 34d, which determines an operation position. The upshift switch 34u generates an upshift signal when pulled toward the driver, and the downshift switch 34d generates a downshift signal when pulled toward the driver.

A wheel speed sensor 36 is provided on a wheel 26 of the electric vehicle 10. The wheel speed sensor 36 is used as a vehicle speed sensor for detecting a vehicle speed of the electric vehicle 10. Additionally, a rotational speed sensor 38 is provided on the electric motor 44 in order to detect a rotational speed thereof.

The electric vehicle 10 includes a control device 50. The control device 50 is typically an electronic control unit (ECU) installed in the electric vehicle 10. The control device 50 may be a combination of a plurality of electronic control units. The control device 50 includes an interface, at least one memory, and at least one processor. A vehicle network is connected to the interface. The memory comprises RAM that temporarily records data and ROM that stores a program executable by the processor and various data associated with the program. The program is composed of a plurality of instructions. The processor reads out the program and data from the memory, executes the instructions, and generates a control signal based on the signal acquired from each sensor.

For example, the control device 50 controls the electric motor 44 by PWM control of the inverter 42. Signals from the accelerator position sensor 32, the pseudo shift paddle 24, the wheel speed sensor 36, the rotational speed sensor 38, the upshift switch 34u, and the downshift switch 34d are input to the control device 50. The control device 50 processes these signals and calculates a motor torque command value for the PWM control of the inverter 42.

The control device 50 includes the automatic mode and the manual mode as control modes. An automatic mode is a normal control mode for operating the electric vehicle 10 as a general electric vehicle. The automatic mode is programmed to continuously vary the output of the electric motor 44 according to an operation of the accelerator pedal 22. On the other hand, the manual mode is a control mode for driving the electric vehicle 10 in a manner similar to that of the MT engine vehicle. The manual mode is programed such that an output characteristic of the electric motor 44 with respect to the operation of the accelerator pedal 22 is changed in response to the operation of the pseudo shift paddle 24. That is, the manual mode is a control mode capable of changing the output of the electric motor 44 in response to a driving operation of a manual driving component other than the accelerator pedal 22 and the brake pedal.

The control device 50 includes an automatic mode torque calculation portion 54 and a manual mode torque calculation portion 56. Each of portions 54 and 56 may be an independent ECU, or may be a function of the ECU realized by executing a program recorded in the memory with the processor.

The automatic mode torque calculation portion 54 includes a function to calculate a motor torque when the electric motor 44 is controlled in the automatic mode. The motor torque command map is stored in the automatic mode torque calculation portion 54. The motor torque command map is a map for determining motor torque from the accelerator position and the rotational speed of the electric motor 44. The signal from the accelerator position sensor 32 and the signal from the rotational speed sensor 38 are input to each parameter of the motor torque command map. From the motor torque command map, the motor torque corresponding to these signals is output. Therefore, in the automatic mode, even if the driver operates the pseudo shift paddle 24, such operation is not reflected in the motor torque.

A manual mode torque calculation portion 56 includes an MT engine vehicle model. The MT engine vehicle model is a model for calculating a drive wheels torque that should be obtained by the operation of the accelerator pedal and the pseudo shift paddle if assuming that the electric vehicle is the MT engine vehicle.

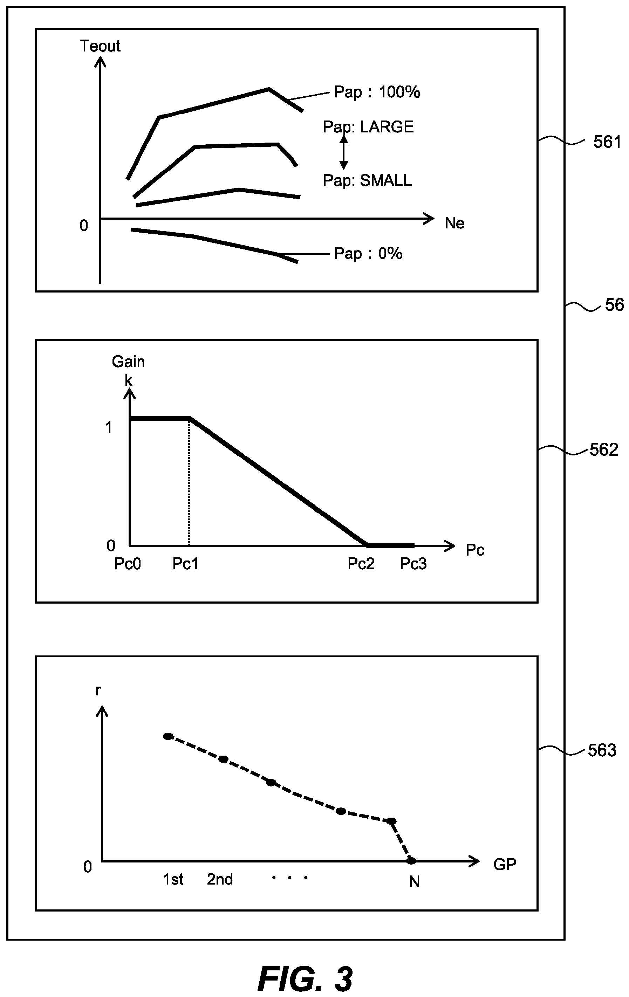

The MT engine vehicle model included in the manual mode torque calculation portion 56 will be explained with reference to Fig. 3. As shown in Fig. 3, the MT engine vehicle model includes an engine model 561, a clutch model 562, and a transmission model 563. It should be noted that an engine, a clutch, and a transmission, which are virtually realized by the MT engine vehicle model, are referred to as a virtual engine, a virtual clutch, and a virtual transmission, respectively. In the engine model 561, the virtual engine is modeled. In a clutch model 562, the virtual clutch is modeled. In the transmission model 563, the virtual transmission is modeled.

The engine model 561 calculates a virtual engine speed Ne and a virtual engine output torque Teout. The virtual engine speed Ne is calculated based on a rotational speed Nw of a wheel, a total reduction ratio R, and a slip ratio Rslip of the virtual clutch. For example, the virtual engine speed Ne is represented by the following equation (1). $Ne = Nw \times R / \left(1-Rslip\right)$

The virtual engine output torque Teout is calculated based on the virtual engine speed Ne and the accelerator position Pap. In the calculation of the virtual engine output torque Teout, as shown in Fig. 3, a map that defines a relationship among the accelerator position, the virtual engine speed Ne, and the virtual engine output torque Teout is used. In this map, the virtual engine output torque Teout is provided for the virtual engine speed Ne at each accelerator position Pap. The torque characteristic shown in Fig. 3 may be set to a characteristic assuming a gasoline engine or may be set to a characteristic assuming a diesel engine. Furthermore, the characteristic may be set to a characteristic assuming a naturally intake air engine or may be set to a characteristic assuming an engine with a turbocharger.

The clutch model 562 calculates a torque transmission gain k. The torque transmission gain k is a gain for calculating a torque transmission degree of the virtual clutch in accordance with a virtual clutch opening degree Pc. The virtual clutch opening degree Pc is usually 0%, and may be temporarily opened to 100% in conjunction with a shift of a virtual gear stage of the virtual transmission. The clutch model 562 has a map as shown in Fig. 3. In this map, a torque transmission gain k is provided for a virtual clutch opening degree Pc. In Fig. 3, Pc0 corresponds to a position where the virtual clutch opening degree is 0%, and Pc3 corresponds to a position where the virtual clutch opening degree is 100%. The range from Pc0 to Pc1 and the range from Pc2 to Pc3 are dead zones in which the torque transmission gain k does not change depending on the virtual clutch opening degree Pc. The clutch model 562 calculates an output torque Tcout by using a torque transmission gain k. The clutch output torque Tcout is a torque output from the virtual clutch. For example, the clutch output torque Tcout is given as a product of the virtual engine output torque Teout and the torque transmission gain k (Tcout = Teout * k).

Further, the clutch model 562 calculates a slip ratio Rslip. The slip ratio Rslip is used for calculation of the virtual engine speed Ne in the engine model 561. For calculation of the slip ratio Rslip, similar to the torque transmission gain k, a map can be used in which the slip ratio Rslip is provided for the virtual clutch opening degree Pc.

The transmission model 563 calculates a gear ratio (speed ratio) r. The gear ratio r is a gear ratio determined by a virtual gear position GP in the virtual transmission. Upon receiving the upshift operation of the pseudo shift paddle 24, the virtual gear position GP is upshifted by one step. On the other hand, upon receiving the downshift operation of the pseudo shift paddle 24, the virtual gear position GP is downshifted by one step. The transmission model 563 includes a map as shown in Fig. 3. In this map, the gear ratio r is set in relation to the virtual gear position GP such that the greater the virtual gear position GP, the smaller the gear ratio r becomes. The transmission model 563 calculates an output torque Tgout of a transmission using the gear ratio r and the clutch output torque Tcout, which are obtained from a map. For example, the transmission output torque Tgout is given as a product of the clutch output torque Tcout and the gear ratio r (Tgout = Tcout * r). The transmission output torque Tgout changes discontinuously according to switching of the gear ratio r. The variation in a discontinuous transmission output torque Tgout generates a shift shock, thereby creating the characteristic feel typical of a vehicle equipped with a stepped transmission.

The MT engine vehicle model calculates a drive wheels torque Tw using a predetermined reduction ratio rr. The reduction ratio rr is a fixed value determined by a mechanical structure from the virtual transmission to the drive wheels. A value obtained by multiplying the gear ratio r by the reduction ratio rr is the aforementioned total reduction ratio R. The MT engine vehicle model calculates the drive wheels torque Tw from the transmission output torque Tgout and the reduction ratio rr. For example, the drive wheels torque Tw is given as the product of the transmission output torque Tgout and the reduction ratio rr (Tw = Tgout × rr).

The control device 50 converts the drive wheels torque Tw, which is calculated by the MT engine vehicle model, into a required motor torque Tm. The required motor torque Tm is a motor torque that is required to realize the drive wheels torque Tw calculated by the MT engine vehicle model. For the conversion of the drive wheels torque Tw into the required motor torque Tm, a reduction ratio from an output shaft of the electric motor 44 to the drive wheels is used. Then, the control device 50 controls the inverter 42 so as to control the electric motor 44 in accordance with the required motor torque Tm.

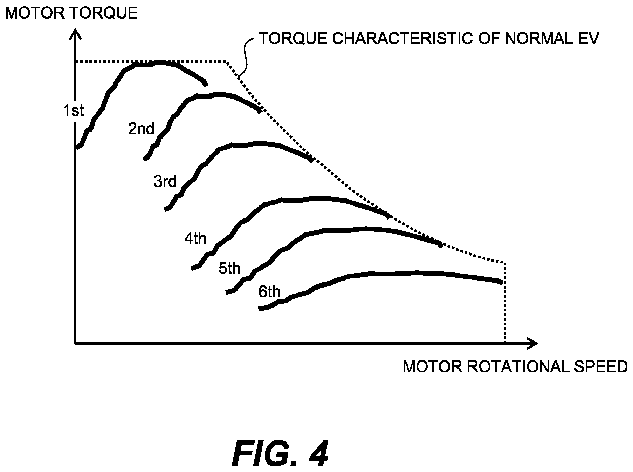

Fig. 4 is a diagram illustrating, in comparison, a torque characteristic of the electric motor 44 realized by the motor control using the MT engine vehicle model, and a torque characteristic of the electric motor 44 realized by a conventional motor control as an electric vehicle (EV). According to the motor control using the MT engine vehicle model, as shown in Fig. 4, it is possible to realize the torque characteristic (solid line in the drawing) that imitates the torque characteristic of an MT engine vehicle in accordance with the virtual gear stage set by the pseudo shift paddle 24. In Fig. 4, the number of the gear stages is set to six.

### 2-2. Second configuration example

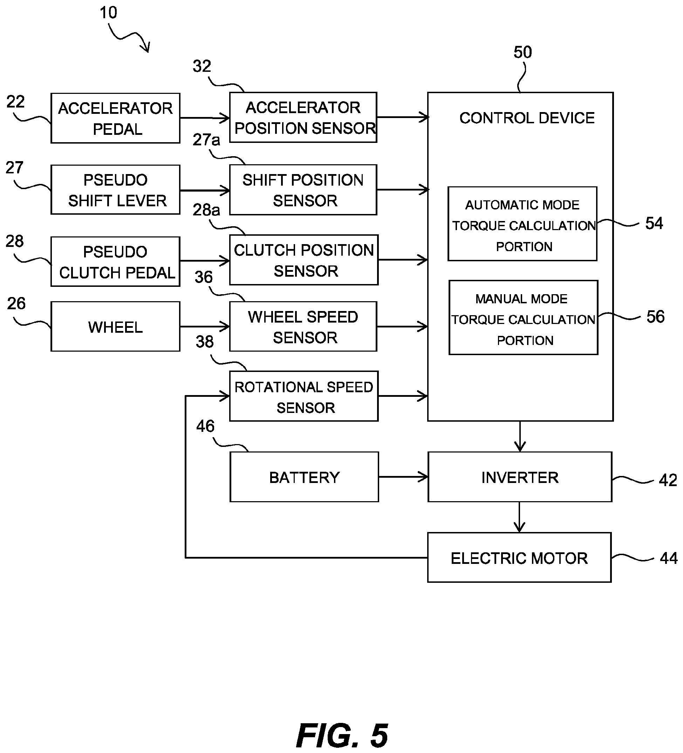

Fig. 5 is a block diagram showing a second configuration example of a power control system for the electric vehicle 10. Hereinafter, only configurations different from the above-described first configuration example will be described. Specifically, in the second configuration example, the electric vehicle 10 is provided with a pseudo shift lever 27 and a pseudo clutch pedal 28 instead of the pseudo shift paddle 24 provided in the first configuration example. The pseudo shift lever 27 and the pseudo clutch pedal 28 are, by nature, dummies that are distinct from an actual shift lever and clutch pedal.

The pseudo shift lever 27 has a structure that imitates a shift lever provided in the MT engine vehicle. The arrangement and operational feel of the pseudo shift lever 27 are equivalent to those in an actual MT engine vehicle. The pseudo shift lever 27 is provided with positions corresponding to each gear stage, for example, first gear, second gear, third gear, fourth gear, fifth gear, sixth gear, reverse, and neutral. A shift position sensor 27a is provided on the pseudo shift lever 27 to detect a gear stage by determining which position the pseudo shift lever 27 is in.

The pseudo clutch pedal 28 has a structure that imitates a clutch pedal provided in the MT engine vehicle. The arrangement and operational feel of the pseudo clutch pedal 28 are equivalent to those of the actual MT engine vehicle. The pseudo clutch pedal 28 is operated when the pseudo shift lever 27 is manipulated. That is, when the driver wishes to change the gear stage setting by means of the pseudo shift lever 27, the driver depresses the pseudo clutch pedal 28, and after completion of the change of the gear stage setting, the driver releases the depression and returns the pseudo clutch pedal 28 to its original position. A clutch position sensor 28a for detecting the depression amount of the pseudo clutch pedal 28 is provided in the pseudo clutch pedal 28.

Signals from the accelerator position sensor 32, the shift position sensor 27a, the clutch position sensor 28a, the wheel speed sensor 36, and the rotational speed sensor 38 are input to the control device 50. The control device 50 processes these signals and calculates a motor torque command value for performing the PWM control of the inverter 42.

The control device 50 includes, as the control modes, the automatic mode and the manual mode, similarly to the first configuration example described above. The automatic mode is programmed to continuously vary output of the electric motor 44 in accordance with operation of the accelerator pedal 22. On the other hand, the manual mode is a control mode for operating the electric vehicle 10 like the MT engine vehicle. The manual mode is programmed so as to change the output of the electric motor 44 in response to operations of the pseudo clutch pedal 28 and the pseudo shift lever 27 with respect to an operation of the accelerator pedal 22.

A vehicle model included in the manual mode torque calculation portion 56 is similar to that shown in Fig. 3. However, the virtual clutch opening degree Pc is replaced by an amount of depression of the pseudo clutch pedal 28, which is detected by the clutch position sensor 28a. Further, the virtual gear position GP is determined by the position of the pseudo shift lever 27, which is detected by the shift position sensor 27a.

### 3. Output control of pseudo engine sound

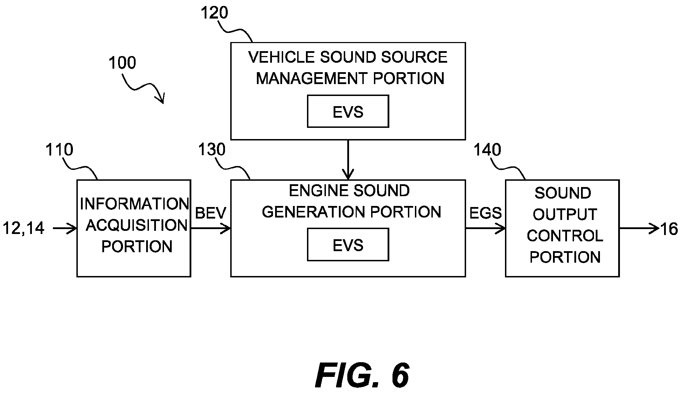

In the embodiment, output control of the pseudo engine sound is executed in place of, or in addition to, the output control of the electric motor. Fig. 6 is a block diagram showing an exemplary functional configuration of the vehicle control device 100 relating to the output control of the pseudo engine sound. The vehicle control device 100 includes, as function block associated with the pseudo engine sound, an information acquisition portion 110, a vehicle sound source management portion 120, an engine sound generation portion 130, and a sound output control portion 140. These function blocks are realized, for example, through cooperation between the processor 102 and the memory device 104.

The information acquisition portion 110 acquires information BEV regarding the electric vehicle 10. The information BEV includes information about a driving state of the electric vehicle 10 and information about a driving environment of the electric vehicle 10. The information BEV is typically detected or determined by the various sensors 12. A part of information regarding the driving environment of the electric vehicle 10 may be acquired by combining information detected by the various sensors 12 (e.g., the positional information on the electric vehicle 10) with map data.

Further, the information BEV includes the virtual engine speed Ne. Here, it is assumed that the electric vehicle 10 uses a virtual engine as a driving power device. The virtual engine speed Ne is a rotational speed of the virtual engine in the case where the electric vehicle 10 is assumed to be driven by the virtual engine. For example, the information acquisition portion 110 may calculate the virtual engine speed Ne such that it increases as the wheel speed increases. Further, when the electric vehicle includes the manual mode, the information acquisition portion 110 may calculate the virtual engine speed Ne in the manual mode based on the wheel speed, the overall reduction ratio, and the slip ratio of the virtual clutch. The calculation of the virtual engine speed Ne in the manual mode can be performed using, for example, the Equation (1).

The vehicle sound source management portion 120 stores sound source data EVS of an engine vehicle, which is used for generating the pseudo engine sound. The vehicle sound source management portion 120 is primarily implemented by the memory device 104. Typically, the sound source data EVS includes a plurality of types of sound source data. The plurality of types of sound source data includes, for example, sound source data of sounds caused by a combustion of an engine (for low rotational speed, for medium rotational speed, for high rotational speed), sound source data of sounds caused by operations of a driving system such as gears (for low rotational speed, for medium rotational speed, for high rotational speed), sound source data of noise sounds, and sound source data of event sounds (e.g., an engine stall sound), and the like. Each sound source data is previously generated through a simulation or the like based on an engine model and a vehicle model of an engine vehicle. Each sound source data is flexibly adjustable. Specifically, at least one of a sound pressure and a frequency of the sound indicated by the sound source data can be flexibly adjusted.

The engine sound generation portion 130 (an engine sound simulator) is a simulator that generates the pseudo engine sound. The engine sound generation portion 130 acquires at least a part of the information BEV from the information acquisition portion 110. Specifically, the engine sound generation portion 130 acquires information such as the virtual engine speed Ne and the vehicle speed from the information acquisition portion 110. Further, the engine sound generation portion 130 reads the sound source data EVS of the engine vehicle from the vehicle sound source management portion 120. Then, the engine sound generation portion 130 generates the pseudo engine sound corresponding to the operating state (a virtual engine speed Ne and a vehicle speed) of the electric vehicle 10 by combining one or more sound source data included in the sound source data EVS of the engine vehicle. Engine sound data EGS is data indicating a generated pseudo engine sound.

It should be noted that the generation of the pseudo engine sound is a well-known technique, and a pseudo engine sound generation method applicable to the present disclosure is not particularly limited. For example, the pseudo engine sound may be generated by a well-known engine sound simulator employed in video games and the like. It is also acceptable to employ a method wherein a virtual engine speed Ne-frequency map and a virtual engine torque-sound pressure map are provided, the frequency of the pseudo engine sound is increased or decreased in proportion to the virtual engine speed Ne, and the sound pressure of the pseudo engine sound is increased or decreased in proportion to the virtual engine torque.

The sound output control portion 140 receives the engine sound data EGS generated by the engine sound generation portion 130. The sound output control portion 140 then outputs the engine sound data EGS to the speaker 16. Upon outputting the engine sound data EGS, the sound output control portion 140 controls the sound pressure of the pseudo engine sound by controlling an amplifier via the sound output control portion 140. Further, the sound output control portion 140 varies a frequency of the pseudo engine sound by controlling an FMC (frequency modulator).

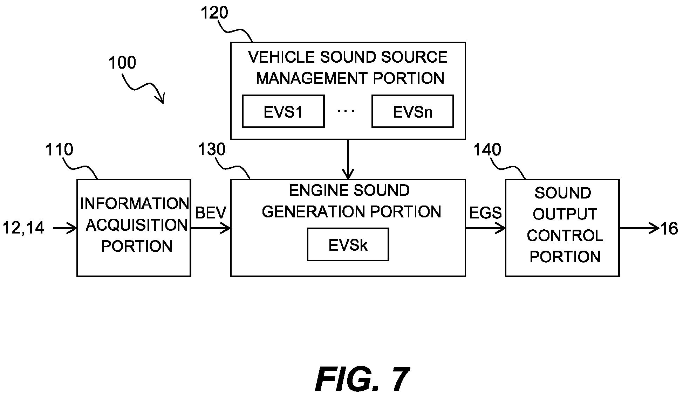

Fig. 7 is a block diagram illustrating another example of the functional configuration of the vehicle control device 100 related to the output control of the pseudo engine sound. In the example illustrated in Fig. 7, the vehicle sound source management portion 120 stores a plurality of types of engine vehicle sound source data EVS (EVS1, ..., EVSn) corresponding to each of a plurality of vehicle types (1, ..., n). That is, the vehicle sound source management portion 120 stores the engine vehicle sound source data EVS for each vehicle type. Sound source data EVSk (1≤k≤n) is generated in advance based on the engine model and vehicle model of the corresponding vehicle type. The driver may specify a preferred vehicle type from among the plurality of vehicle types. In such a case, the engine sound generation portion 130 acquires sound source data EVSk corresponding to the type of the vehicle designated by the driver. Subsequently, the engine sound generation portion 130 generates the pseudo engine sound by using the acquired sound source data EVSk of the engine vehicle. As a result, the driver can obtain a sense of driving the preferred vehicle type.

### 4. Notification of driving operation mode switching

### 4-1. Necessity of switching notification

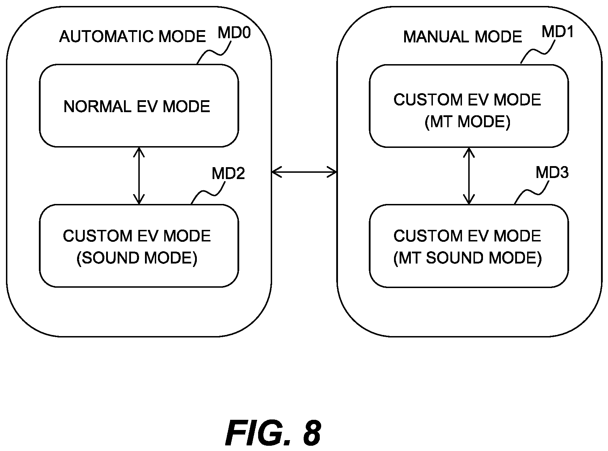

As described above, in the embodiment, at least one of the output control of the electric motor and the output control of the pseudo engine sound is performed. Therefore, the automatic mode and the manual mode described in the explanation of the output control of the electric motor are to be subdivided in consideration of the execution of the output control of the pseudo engine sound. Fig. 8 is a diagram illustrating expected operation modes in the embodiment. In the example shown in Fig. 8, the automatic mode includes a normal EV mode MD0 and a custom EV mode (a customized EV mode) MD2. The manual mode includes a custom EV mode MD1 and a custom EV mode MD3.

The normal EV mode MD0 and the custom EV mode MD1 are operation modes in which only the output control of the electric motor is performed. In the normal EV mode MD0, a normal control for driving the electric vehicle 10 as a general electric vehicle is performed. In the custom EV mode MD1, a control for driving the electric vehicle 10 so as to simulate the torque characteristic of the MT engine vehicle is performed. The custom EV mode MD1 is an example of a "custom mode" according to the present disclosure, and is also referred to as a MT mode.

The custom EV modes MD2 and MD3 are operation modes in which the output control of the pseudo engine sound is performed. Even in the custom EV modes MD2 and MD3, the output control of the electric motor is performed. However, the output control of the electric motor in the custom EV mode MD2 is the same as that in the normal EV mode MD0. Further, the output control of the electric motor in the custom EV mode MD3 is the same as that in the custom EV mode MD2. The custom EV mode MD2 and the custom EV mode MD3 are also examples of the custom mode of the present disclosure. The custom EV mode MD2 is also referred to as a sound mode, and the custom EV mode MD3 is also referred to as an MT sound mode.

The switching of the operation modes shown in Fig. 8 occurs between any two types of the operation modes. The switching of the operation modes is performed based on an indication of intention by the driver. For example, the driver makes an indication of intent by operating a mode switching switch. In another example, the driver makes an indication of intent by means of a predetermined gesture. In this case, for example, the indication of intent is confirmed by recognizing the predetermined gesture through an analysis of driver camera images. In another example, the driver indicates intention by emitting a predetermined sound. In this case, for example, the indication of intention is confirmed by recognizing the predetermined sound through analysis of a microphone sound.

As described above, in this embodiment, the normal EV mode and three types of custom EV modes are envisioned. Therefore, there is a possibility that the driver misunderstands the operation mode switched based on the driver's indication of intention. Thus, for example, when switching from the automatic mode (the mode MD0) to the manual mode (the mode MD1), or when switching from the automatic mode (the mode MD2) to the manual mode (the mode MD3), there is a possibility that the driver may feel a feeling of strangeness with respect to the behavior of the electric vehicle.

Accordingly, in the embodiment, when a switching of the operation mode is detected, a notification sound corresponding to the operation mode before or after the switching is output from the speaker 16. The operation mode before or after the switching is based on the custom EV mode (the mode MD1, MD2, or MD3). Specifically, when the switch from the normal EV mode MD0 to the custom EV mode (the mode MD1, MD2, or MD3) is detected, sound data NF1 notifying that the custom EV mode has started is output from the speaker 16. When the switch from the custom EV mode to the normal EV mode MD0 is detected, sound data NF2 notifying that the custom EV mode has ended is output from the speaker 16.

When the switch between the custom EV modes is detected, a notification sound may be output from the speaker 16 based on the custom EV mode after the switch. For example, when the switch from a first custom EV mode (e.g., the mode MD2) to a second custom EV mode (e.g., the mode MD3) is detected, sound data NF3 notifying that the second custom EV mode (e.g., the mode MD3) is output from the speaker 16.

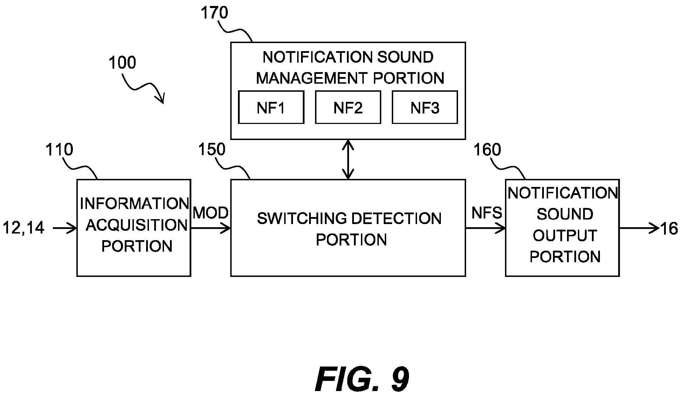

Fig. 9 is a block diagram illustrating an example of a functional configuration of the vehicle control device 100 related to the output control of the notification sound. In the example shown in Fig. 9, the vehicle control device 100 includes, in addition to the information acquisition portion 110 described in Fig. 6, a switching detection portion 150, a notification sound output portion 160, and a notification sound source management portion 170. These function blocks are implemented, for example, through cooperation of the processor 102 and the memory device 104.

The switching detection portion 150 receives setting information MOD of the operation mode from the information acquisition portion 110. The switching detection portion 150 detects the switching of the operation mode based on the setting information MOD. When the switching of the operation mode is detected, the switching detection portion 150 specifies the notification sound data NFS to be output to the speaker 16 by referencing the notification sound source management portion 170 using the setting information MOD of the operation mode before and after the switching. When the notification sound data NFS is specified, the switching detection portion 150 transmits it to the notification sound output portion 160.

The notification sound output portion 160 receives the notification sound data NFS from the switching detection portion 150. Then, the notification sound output portion 160 outputs the notification sound data NFS to the speaker 16.

The notification sound source management portion 170 stores sound source data of the notification sound. The notification sound source management portion 170 is mainly realized by the memory device 104. As the sound source data of the notification sound, the sound data NF1, NF2, and NF3 are exemplified. The sound data NF1 is sound data that notifies that the normal EV mode MD0 has ended and the custom EV mode (i.e., the mode MD1, MD2, or MD3) has started. The sound data NF2 is sound data that notifies that the custom EV mode (i.e., the mode MD1, MD2, or MD3) has ended and the normal EV mode MD0 has started. The sound data NF3 is sound data that notifies that the switching between two types of the custom EV modes has occurred.

The sound data NF1 includes, for example, a sound indicating the start of the custom EV mode after switching (e.g., "You have entered the MT mode" or "You have entered the sound mode"). The sound data NF2 includes, for example, a sound indicating the end of the custom EV mode before switching (e.g., "You have exited the MT mode" or "You have exited the sound mode"). For example, the sound data NF3 includes a sound for announcing the start of the custom EV mode after switching, such as "You have entered the sound mode" or "You have entered the MT sound mode." In this manner, the contents of a sound included in the sound data NF1 and the contents of a voice included in the sound data NF3 may be the same. On the other hand, the contents of the sound included in the sound data NF1 and the contents of the sound included in the sound data NF2 are never the same.

The sound data NF1, NF2, and NF3 may include a simple notification sound (e.g., a beep sound). In this case, the sound data NF1 and NF3 may include a fade-in playback sound of a specific sound. On the other hand, the sound data NF2 may include a fade-out playback sound of this specific sound. The fade-in reproduced sound and the fade-out reproduced sound differ in tone quality. Therefore, the playback sound included in the sound data NF1 and NF3 will never be the same as that included in the sound data NF2.

The sound data NF1, NF2, and NF3 may include an engine sound of an engine vehicle. In this case, the sound data NF1 and NF3 may include the engine sound when an ignition of the engine vehicle is turned on. On the other hand, the sound data NF2 may include the engine sound of the engine vehicle when the ignition is turned off. The engine sound when the ignition is turned on is different in tone quality from the engine sound when the ignition is turned off. Therefore, the engine sound included in the sound data NF1 and NF3 is never the same as that included in the sound data NF2. The sound data NF1 and NF3 may include an engine sound (acceleration revving sound) of the engine vehicle during acceleration. On the other hand, the sound data NF2 may include an engine sound of the engine vehicle during deceleration.

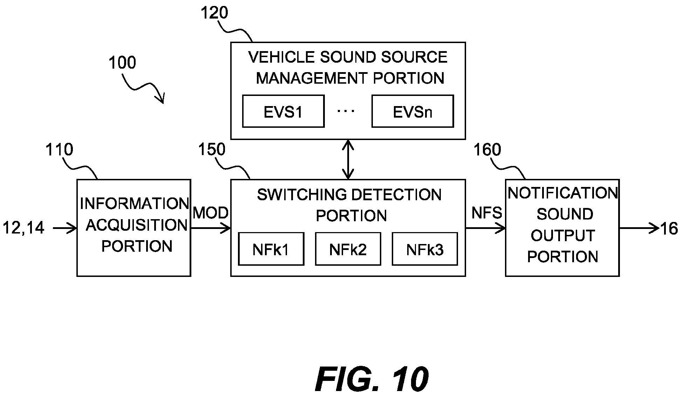

In cases where the output control of the pseudo engine sound is performed, the engine sound included in the sound data NF1, NF2, and NF3 may be generated from the sound source data EVSk, which corresponds to the vehicle model designated by the driver. Fig. 10 is a block diagram showing another example of a functional configuration of the vehicle control device 100 with respect to the output control of the notification sound. In the example shown in Fig. 10, a switching detection portion 150 identifies the sound source data EVSk (1<k<n) corresponding to the type of the vehicle designated by the driver, by referring to the vehicle sound source management portion 120 described with reference to Fig. 7. Then, when the switching of the operation mode is detected, the switching detection portion 150 generates the notification sound data NFS (the sound data NFk1, NFk2, or NFk3) from the sound source data EVSk by using the setting information MOD of the operation modes before and after the switching. When the notification sound data NFS is generated, the switching detection portion 150 transmits the notification sound data NFS to the notification sound output portion 160.

The sound data NFk1 and NFk3 may include an engine sound when the ignition of the type of the vehicle designated by the driver is turned on. In this case, the sound data NFk2 may include an engine sound when the ignition of the type of the vehicle designated by the driver is turned off. The sound data NFk1 and NFk3 may include an engine sound (acceleration revving sound) during acceleration of the type of the vehicle designated by the driver. In this case, the sound data NFk2 may include an engine sound during deceleration of the engine vehicle.

### 4-2. Processing example

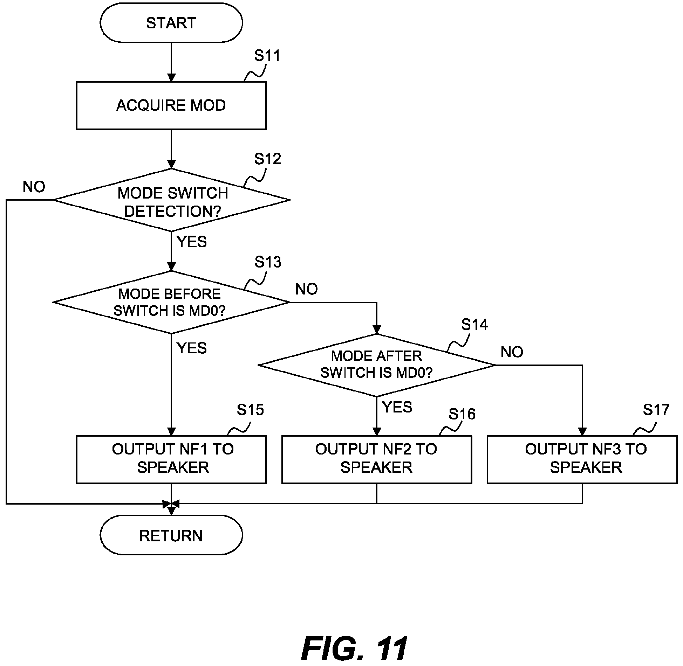

Fig. 11 is a flowchart illustrating a flow of computer processing particularly related to the embodiment. The flowchart shown in Fig. 11 is repeatedly executed by the processor 102 shown in Fig. 1 at a predetermined control cycle.

In the routine shown in Fig. 11, first, the setting information MOD is acquired (step S11). The setting information MOD is information regarding the operation mode specified by the driver. Examples of the operation mode include the four types of modes MD0 to MD3 explained in Fig. 8.

Subsequent to the processing of step S11, it is determined whether the switching of the operation mode has been detected (step S12). The determination in step S12 is performed based on the setting information MOD acquired in the processing of step S11. When the determination result of step S12 is positive, processing of step S13 and step S14 are performed. The processing of step S13 and step S14 are processing for determining whether the operation mode before or after switching corresponds to the normal EV mode MD0.

When the determination result of the processing of step S13 is positive, this means that the operation mode after switching corresponds to the custom EV mode (i.e., the mode MD1, MD2, or MD3). Therefore, when the determination result of the processing in step S13 is positive, the sound data NF1 for notifying that the custom EV mode has been started is output to the speaker 16. When the determination result of the processing in step S14 is positive, it means that the operation mode before switching corresponds to the custom EV mode. Therefore, when the determination result of the processing in step S14 is positive, the sound data NF2 for notifying that the custom EV mode has been ended is output to the speaker 16.

If both determination results of step S13 and S14 are negative, it means that the switching of the operation mode has occurred between two types of the custom EV modes. Therefore, in this case, the sound data NF3 for notifying that the switching has occurred between the custom EV modes is output to the speaker 16.

### 4-3. Effect

According to the embodiment, it becomes possible to change the output mode of the notification sound from the speaker 16 when the switching from the normal EV mode MD0 to the custom EV mode is detected, and that of the notification sound when the switching from the custom EV mode to the normal EV mode MD0 is detected. Accordingly, it becomes possible to correctly inform the driver that the custom EV mode has started and that the custom EV mode has ended. This leads to a secure feeling in the use of the custom EV mode, thereby enabling the driver to experience a sensation obtained through driving the engine vehicle in various driving situations.

### [Reference Signs List]

10 Electric vehicle, 12 Various sensors, 14 Various switches, 16 Speaker, 22 Accelerator pedal, 24 Pseudo shift paddle, 27 Pseudo shift lever, 28 Pseudo clutch pedal, 44 Electric motor, 100 Vehicle control device, 102 Processor, 104 Memory device, 110 Information acquisition portion, 120 Vehicle sound source management portion, 130 Engine sound generation portion, 140 Sound output control portion, 150 Switching detection portion, 160 Notification sound output portion, BEV Information relating to an electric vehicle, EGS Engine sound data, EVS Sound source data of engine vehicle, MOD Setting information, NFS Notification sound data, MD0 Normal EV operation mode, MD1-MD3 Custom EV operation modes, NF1-NF3 Sound data of notification sound

## Claims

1. A vehicle control method applied to an electric vehicle that uses an electric motor as a driving power unit for traveling, the method comprising:
acquiring setting information on an operation mode of the electric vehicle; and
when switching of the operation mode is detected based on the setting information, outputting, from a speaker of the electric vehicle, a notification sound for notifying a driver of the electric vehicle of the switching,
wherein the operation mode includes a custom mode in which at least one of:
(i) output control of the electric motor based on operation information on a manual driving element of the electric vehicle and;
(ii) output control of a pseudo engine sound that is generated based on the operation information
is performed,
wherein an output manner of the notification sound output from the speaker in response to the detection of the switching to the custom mode is different from an output manner of the notification sound output from the speaker in response to the detection of the switching from the custom mode.

2. The vehicle control method according to claim 1,
wherein content of the notification sound output from the speaker in response to the detection of the switching to the custom mode is different from content of the notification sound output from the speaker in response to the detection of the switching from the custom mode.

3. The vehicle control method according to claim 1,
wherein the notification sound output from the speaker is played with fade-in effect in response to the detection of the switching to the custom mode, and the notification sound output from the speaker is played with fade-out effect in response to the detection of the switching from the custom mode.

4. The vehicle control method according to claim 1,
wherein both the notification sound output from the speaker in response to the detection of the switching to the custom mode and the notification sound output from the speaker in response to the detection of the switching from the custom mode include an engine sound of a predetermined engine vehicle.

5. The vehicle control method according to claim 4, wherein:
the notification sound output from the speaker in response to the detection of the switching to the custom mode includes the engine sound when an ignition of the predetermined engine vehicle is turned on; and
the notification sound output from the speaker in response to the detection of the switching from the custom mode includes the engine sound when the ignition of the predetermined engine vehicle is turned off.

6. The vehicle control method according to claim 4, wherein:
the notification sound output from the speaker in response to the detection of the switching to the custom mode includes the engine sound during acceleration of the predetermined engine vehicle; and
the notification sound output from the speaker in response to the detection of the switching from the custom mode includes the engine sound during deceleration of the predetermined engine vehicle.

7. The vehicle control method according to claim 4,
wherein the predetermined engine vehicle is designated from among a plurality of types of engine vehicle,
wherein both the notification sound output from the speaker in response to the detection of the switching to the custom mode and the notification sound output from the speaker in response to the detection of the switching from the custom mode include an engine sound of the designated type of the engine vehicle.

8. The vehicle control method according to any one of claims 1 to 7,
wherein the manual driving element includes an accelerator pedal and a pseudo shift paddle imitating a shift paddle of an engine vehicle.

9. The vehicle control method according to any one of claims 1 to 7,
wherein the manual driving element includes an accelerator pedal, a pseudo clutch pedal imitating a clutch pedal of an engine vehicle, and a pseudo shift lever imitating a shift lever of an engine vehicle.

10. A vehicle control device applied to an electric vehicle that uses an electric motor as a driving power unit for traveling, comprising:
one or more processors configured to execute various processing,
wherein the one or more processors are configured to:
acquire setting information on an operation mode of the electric vehicle; and
when switching of the operation mode is detected based on the setting information, cause a speaker of the electric vehicle to output a notification sound for notifying a driver of the electric vehicle of the switching,
wherein the operation mode includes a custom mode in which at least one of:
(i) output control of the electric motor based on operation information on a manual driving element of the electric vehicle and;
(ii) output control of a pseudo engine sound that is generated based on the operation information
is performed,
wherein an output manner of the notification sound output from the speaker in response to the detection of the switching to the custom mode is different from an output manner of the notification sound output from the speaker in response to the detection of the switching from the custom mode.

11. An electric vehicle that uses an electric motor as a driving power unit, comprising:
a speaker;
a manual driving element; and
one or more processors configured to execute various processing,
wherein the one or more processors are configured to:
acquire setting information on an operation mode of the electric vehicle; and
when switching of the operation mode is detected based on the setting information, cause the speaker to output a notification sound for notifying a driver of the electric vehicle of the switching,
wherein the operation mode includes a custom mode in which at least one of:
(i) output control of the electric motor based on operation information on a manual driving element of the electric vehicle and;
(ii) output control of a pseudo engine sound that is generated based on the operation information
is performed,
wherein an output manner of the notification sound output from the speaker in response to the detection of the switching to the custom mode is different from an output manner of the notification sound output from the speaker in response to the detection of the switching from the custom mode.
